(19) **Europäisches Patentamt**
**European Patent Office**
**Office européen des brevets**

(11) Veröffentlichungsnummer: **0 342 559**
**A1**

(12) **EUROPÄISCHE PATENTANMELDUNG**

(21) Anmeldenummer: 89108639.9

(22) Anmeldetag: 12.05.89

(51) Int. Cl.⁴: **B01D 50/00 , B01D 53/34 , B01D 45/14 , B01J 8/10**

(30) Priorität: 17.05.88 DE 3816729
04.02.89 DE 3903384

(43) Veröffentlichungstag der Anmeldung:
23.11.89 Patentblatt 89/47

(84) Benannte Vertragsstaaten:
AT BE CH DE ES FR GB IT LI NL

(71) Anmelder: **Christian, Paul**
**Akazienstrasse 5**
**D-7107 Friedrichshall(DE)**

(72) Erfinder: **Christian, Paul**
**Akazienstrasse 5**
**D-7107 Friedrichshall(DE)**

(74) Vertreter: **Müller, Hans**
**Lerchenstrasse 56**
**D-7100 Heilbronn(DE)**

(54) Vorrichtung zum Abscheiden von Stäuben und/oder sauren Schadstoffen aus Gasen sowie Gliederkopf für diese Vorrichtung.

(57) Eine Vorrichtung zum Abscheiden von Stäuben und/oder von sauren Schadstoffen aus Gasen, wobei die sauren Schadstoffe mit Hilfe basischer Stoffe gebunden werden, bei der im unteren Bereich des Reaktorgefäßes ein um eine vertikale Achse rotierend antreibbarer Gliederkopf angeordnet ist zeichnet sich dadurch aus, daß im Bereich des Gliederkopfes (23) die Wandung (5) des Reaktorgefäßes (1) konzentrisch zur Gliederkopfachse (2) ist, daß der Gliederkopf aus einer zentralen Nabe (26) und daran außen angeordneten Gliedern (30 - 45, 58), die über den Umfang der Nabe verteilt sind, besteht und daß sich die Glieder bei Rotation bis fast an die Wandung erstrecken.

Fig.1

## Vorrichtung zum Abscheiden von Stäuben und/oder sauren Schadstoffen aus Gasen sowie Gliederkopf für diese Vorrichtung

Die Erfindung betrifft eine Vorrichtung zum Abscheiden von Stäuben und/oder von sauren Schadstoffen aus Gasen, wobei die sauren Schadstoffe mit Hilfe basischer Stoffe gebunden werden, mit zumindest einem Reaktorgefäß, das von dem zu reinigenden Gas durchströmt wird, in das gegebenenfalls die basischen Stoffe eingetrieben werden und das Wirbelbildner in der Bahn des Gases aufweist, bei dem im unteren Bereich des Reaktorgefäßes ein um eine vertikale Achse rotierend antreibbarer Gliederkopf angeordnet ist. Die Erfindung betrifft auch den für diese Vorrichtung besonders geeigneten Gliederkopf.

Bei einer bekannten Vorrichtung dieser Art zum Abscheiden von sauren Schadstoffen durchsetzt das Gas im unteren Bereich des Rektorgefäßes eine Strömungshindernisse aufweisende Wirbelschicht, in der das Gas verwirbelt wird. Darüber wird es im Reaktorgefäß befeuchtet und mit Kalkstaub versetzt. Das so versetzte feuchte Gas wird in den nachfolgenden Reinigungsstufen weiter verwirbelt und durch Filter von den Festteilchen getrennt.

Bei den basischen Feststoffen handelt es sich vorzugsweise um Kalziumverbindungen, wie Kalziumcarbonat, Kalziumhydroxid oder andere Kalke. Die Reinigungswirkung beruht darauf, daß saure Schadstoffe, wie z. B. Schwefeldioxyd, schwefelige Säuren, Salzsäure, mit den Kalziumverbindungen unschädliche, schwer lösliche Verbindungen eingehen, die als Festteilchen leicht aus den Gasen ausgefiltert werden können. Für diese angestrebte Wirkung ist ein intensiver Oberflächenkontakt zwischen den Staubteilchen der Kalziumverbindungen und den sauren Schadstoffen erforderlich und der wiederum wird begünstigt durch eine gute Durchmischung der Kalziumverbindungen mit dem Gas und eine lange Verweildauer des so versetzten Gases im Reaktorgefäß.

Staubteilchen in den zu reinigenden Gasen begünstigen die angestrebte reinigende Wirkung, weil sich saure Schadstoffe auch an diesen Staubteilchen anlagern.

Aus der DE-OS 33 24 124 ist eine Vorrichtung zum Abscheiden von sauren Schadstoffen aus Gasen bekannt, bei der das zu reinigende Gas eine Behandlungszone durchströmt, in der eine als Gebläse wirkende, rotierende Scheibenanordnung angeordnet ist, deren Scheiben ständig mit einer Waschflüssigkeit beaufschlagt werden, so daß auf den Scheiben ein radial nach auswärts in Form einer ringförmigen Sprühzone abreißender Flüssigkeitsbelag gebildet wird. Durch diese Anordnung wird die Vermischung des zu reinigenden Gases gegenüber stationären Wirbelbildnern begünstigt.

Die für den angestreben Reinigungszweck vorteilhaften im zu reinigenden Gas vorhandenen Staubteilchen und die zugesetzten pulverförmigen basischen Verbindungen und deren Reaktionsprodukte neigen zur Krustenbildung. Wenn sich solche Krusten insbesondere an den rotierenden oder stationären Wirbelbildnern absetzen, wird die Funktion behindert und die Anlage muß stillgesetzt und gereinigt werden.

Aufgabe der Erfindung ist est, Einrichtungen der eingangs genannten Art mit möglichst hohem Wirkungsgrad - sowohl in technischer als auch in wirtschaftlicher Hinsicht - bereitzustellen.

Die Erfindung ist für die erfindungsgemäße Vorrichtung dadurch gekennzeichnet, daß im Bereich des ebenfalls eine Erfindung darstellenden Gliederkopfes die Wandung des Reaktorgefäßes konzentrisch zur Gliederkopfachse ist, daß der Gliederkopf aus einer zentralen Nabe und daran außen angeordneten Gliedern, die über den Umfang der Nabe verteilt sind, be steht und daß sich die Glieder bei Rotation bis fast an die Wandung erstrecken.

Die erfindungsgemäße Vorrichtung eignet sich somit zum Entfernen sowohl von Staubpartikel als auch von sauren Schadstoffen aus Gasen, da in beiden Fällen - einerseits im Gas bereits vorhandene, andererseits erst durch Zugabe von basischen Wirkstoffen gebildete - Feststoffpartikel wirkungsvoll ausgeschieden werden können.

Die Glieder können fest an der Nabe befestigt sein, vorzugsweise sind sie jedoch beweglich angehängt. Die Glieder durchschlagen den zu reinigenden Gasstrom, verursachen dadurch große Druckgradienten und im Gefolge davon Verwirbelungen. Dadurch erfolgen die Beladungen der Gase mit Feststoffstaub, Schmutzstaub, Flüssigkeit und Schadstoffen. Die Glieder erstrecken sich bei Rotation, bedingt durch die Fliehkräfte, radial nach außen und nehmen so ihre für die Verwirbelung optimale Stellung ein. Bei Stillstand des Gliederkopfes hängen sie dagegen schwerkraftbedingt nach unten. Die Glieder sind bezüglich der Krustenbildung selbstreinigend durch die Bewegung, der sie beim Anlaufen und Auslaufen des Gliederkopfes unterworfen sind.

Die Glieder bestehen vorzugsweise aus Stahl, sie können aber auch aus einem hinreichend schweren und stabilen anderen Metall oder Kunststoff bestehen.

Die Einmündung für die Zufuhr der basischen Wirkstoffe in das Innere des Reaktorgefäßes kann nach einer Ausbildungsform der Erfindung unterhalb oder nach einer ganz wesentlichen Ausführungsform der Erfindung oberhalb des Gliederkopfes angeordnet und in den Gasstrom gerichtet sein, wobei der Gasstrom in beiden Fällen die Wirkstoffe mitreißt in den Wirkbereich der rotierenden Glieder, von denen sie durch die verwirbelnde Wirkung dieser Glieder fein im Gas verteilt werden.

Zweckmäßig ist eine Ausgestaltung der Erfindung derart, daß unterhalb des Gliederkopfes mit Spiel Platz im Reaktorgefäß ist für die bei Stillstand des Gliederkopfes unter Schwerkraftwirkung nach unten hängenden Glieder. Man kann in diesen Platz aber auch Hindernisse stellen, an die die Glieder beim Anlaufen oder beim Auslaufen, wenn sie ihre endgültige radiale Stellung noch nicht erreicht haben, anschlagen, um dadurch Erschütterungen der Glieder hervorzurufen, die das Abschütteln beginnender Verkrustungen begünstigen.

Zur Vermeidung der Krustenbildung ist die Beweglichkeit der einzelnen Glieder vorteilhaft und diese wird dadurch begünstigt, daß außen an der Nabe mehrere Glieder angehängt sind, die aus je mehreren, nach Art von Kettenstücken mit gegenseitiger Beweglichkeit aneinandergehängten Gliederelementen bestehen.

Die mit den rotierenden Gliedern hervorgerufene verwirbelnde Wirkung wird dadurch begünstigt, daß die Glieder zu zwei oder mehreren Kränzen angeordnet sind, wobei jeder Kranz aus mehreren auf der gleichen axialen Höhe auf den Umfang verteilt angeordneten Gliedern besteht.

Da die Gasströmung auf ihrem Weg beispielsweise von unten nach oben die Bahn der rotierenden Glieder durchsetzen muß, muß sie in diesem Fall die verschiedenen Kränzen mindestens einmal durchsetzen. Die Wirbelbildung, die durch mehrere solcher Kränze hervorgerufen wird, ist deshalb besonders intensiv, weil Verwirbelungen benachbarter Kränze sich gegenseitig beeinflussen und dabei zu zusätzlichen Wirbeln anregen.

Eine für die angestrebte Wirbelbildung besonders günstige Ausgestaltung der Glieder, die auch sehr einfach herstellbar und leicht zu warten und betriebssicher ist, ist dadurch gekennzeichnet, daß ein Glied aus flachen Ösen besteht, die ineinandergehängt und, bezogen auf ihre Flächenausdehnung, um 90° gegenüber den jeweils benachbarten Ösen verdreht sind. Solche Glieder sind als Kettenabschnitte bekannt und üblich und stehen als Massenproduktionsartikel in den verschiedensten Größen preiswert zur Verfügung.

Durch den 90°-Versatz benachbarter Ösen werden Druckgradienten entlang des radial gestreckten Gliedes im Takte der Gliederelemente hervorgerufen, die für die angestrebte Wirbelbildung günstig sind. Es empfiehlt sich in diesem Fall, die zuinnerst gelegenen Ösen, bezogen auf ihre Flächenausdehnung, parallel zur Gliederkopfachse anzuordnen.

Die Ösen können Ringe, vorzugsweise langgestreckte, ovale Ringe, sein. Man kann aber auch zur Begünstigung der Wirbelbildung ein oder mehrere Ösen nur für den erforderlichen freien Spielraum zum Einhängen der Nachbargliederelemente offen ausgestalten und darüberhinaus geschlossen ausgestalten. Das läuft darauf hinaus, daß die Öse die Form einer Scheibe hat mit zwei diametral gegenüberliegenden Löchern, in denen die benachbarten Ösen eingehängt sind.

Man kann in einem solchen Fall sämtliche Ösen in dieser Weise geschlossen ausgestalten oder aber nur die vertikal stehenden oder eine andere Auswahl treffen.

Eine andere bevorzugte Ausgestaltung ist dadurch gekennzeichnet, daß ein Glied aus einem um seine Längsachse mehrfach verdrehten Flachband aus formstabilem Material, vorzugsweise Eisen, besteht. Ein solches Flachband kann mit einer Öse an der Nabe eingehängt sein, schwenkbar um eine sich tangential zur Drehrichtung erstreckende Achse. Es kann aber auch mit radialer Erstreckung an der Nabe befestigt sein.

Für eine intensive Vermischung und eine hohe Verweildauer ist eine rotierende, zyklonartige Strömung im Reaktorgefäß wünschenswert. Diese wird angetrieben durch den als Gebläse wirkenden Gliederkopf. Für den angestrebten Zweck ist es aber außerdem wünschenswert, die Strömung umzulenken und dazu wird axial gerichtete Strömungsenergie benötigt. Dem trägt eine Weiterbildung der Erfindung Rechnung, durch die das durch den Gliederkopf gebildete Gebläse als Diagonalgebläse ausgebildet ist, die dadurch gekennzeichnet ist, daß im Bereich des Sprühkopfes die Wandung des Reaktorgefäßes nach unten konisch verjüngt ist, vorzugsweise mit 45°, und darüber konzentrisch zur Rotationsachse des Gliederkopfes fortgesetzt ist. Die starke axiale Komponente, die der Gliederkopf der Gasströmung verleiht, kann mit zusätzlichen Schikanen zur Begünstigung der angestrebten Vergrößerung der Vermischung und Verweildauer ausgenutzt werden. Bevorzugte diesbezügliche Ausgestaltungen der Erfindung sind Gegenstand weiterer Unteransprüche wie u. a. der Ansprüche 14 bis 19.

Die pulverförmigen Feststoffe sollen nach Möglichkeit vom Gasaustritt ferngehalten werden. Dem trägt eine Weiterbildung der Erfindung Rechnung, die dadurch gekennzeichnet ist, daß koaxial zu den Rohrstücken und der Gliederkopfachse im Zwischenraum oberhalb des Rohrstückes ein zweiter rotierend antreibbarer Gliederkopf angeordnet ist, dessen Glieder bei Rotation durch den Zwischenraum hindurch in den oberen Bereich des ringförmigen Strömungskanals ragen.

Die auf dem Wege zum Gasaustrittsstutzen befindliche Gasströmung muß die rotierenden Glieder dieses zweiten Gliederkopfes passieren, wird dort noch einmal in Rotation versetzt, so daß die Feststoffteilchen auf dem Weg nach oben zum Gasaustritt radial abgedrängt und in das Reaktorgefäß zurückgeschleudert werden.

Für die angestrebte Reaktion ist Feuchtigkeit wünschenswert, und zwar bis zur Sättigung. Man kann das zu reinigende Gas vor dem Eintritt in das Reaktorgefäß entsprechend befeuchten, wenn es zu trocken ist, oder zu diesem Zweck im Inneren des Reaktorgefäßes eine an eine äußere Wasserversorgung anschließbare Einsprühdüse vorsehen, die in den Gasstrom gerichtet ist.

Eine ganz wesentliche Weiterbildung der Erfindung zeichnet sich dadurch aus, daß der zu reinigende Gasstrom von oben auf den Gliederkopf gerichtet ist und daß ferner die Einmündung für die Zufuhr der basischen Wirstoffe wie beispielsweise der pulverförmigen Feststoffe in das Innere des Reaktorgefäßes hinein oberhalb des Gliederkopfes so angeordnet ist, daß die Wirk- und Feststoffe zusammen mit dem Gasstrom in gleicher Strömungsrichtung auf den Gliederkopf hinbewegbar sind. Dies läßt sich beispielsweise dadurch verwirklichen, daß ein erstes Rohr oberhalb des Gliederkopfes angeordnet wird, dessen Längsachse mit der Rotationsachse des Gliederkopfes zusammenfällt und aus dessen unteren Endbereich das zu reinigende Gas nach unten hin auf den Gliederkopf hin austritt, während in dem oberen Endbereich dieses Rohres sowohl der Zutritt für das zu reinigende Gas als auch für die beispielsweise pulverförmigen Feststoffe ist.

Eine derartige Ausbildung hat mehrere Vorteile. So ist der Wärmeverlust zwischen dem in die Vorrichtung eintretenden und dem austretenden Gas gering, da das oben aus der Vorrichtung wieder austretende Gas den oben in die Vorrichtung einströmenden Gasstrom umgibt. Das eintretende Gas gibt also relativ viel Wärme an das austretende Gas ab. Das austretende Gas kann so wirkungsvoll beispielsweise über Wärmetauscher geleitet werden. Ein weiterer Vorteil liegt darin, daß der im unteren Bereich des jeweiligen Reaktorgefäßes vorhandene Antriebsmotor für den Gliederkopf sehr weit von dem Eintritt der zu reinigenden heißen Gase örtlich entfernt ist. Der Antriebsmotor kann damit an der kühlsten Stelle der Vorrichtung plaziert werden.

Ein weiterer Vorteil ergibt sich im Zusammenhang mit einer weiteren Ausbildung der Erfindung, die dadurch gekennzeichnet ist, daß zumindest zwei Reaktorgefäße nacheinander von dem zu reinigenden Gas durchströmt werden. Aus dem jeweils nachgeschalteten Reaktorgefäß wird eine vorbestimmbare Menge des Gasstromes wieder in den ersten Reaktor zurückgeführt. Außerdem wird nur ein Teil der in das erste Reaktorgefäß einströmenden Gasmenge unmittelbar in das jeweils nachgeschaltete zweite Reaktorgefäß geleitet; eine gewisse Teilmenge dieses Gasstromes wird nach Durchströmen des Reaktorgefäßes wieder in den einströmenden Gasstrom zurückgeführt, so daß diese Menge das Reaktorgefäß noch einmal durchströmt. Ferner wird eine weitere Menge des in das erste Reaktorgefäß einströmenden Gasstromes in einen Reststoffbehälter geleitet, in dem die Reststoffpartikel gesammelt werden können. Der verbleibende Gasstrom wird in das nachgeschaltete Reaktorgefäß eingeleitet. Durch die in Abhängigkeit von der Anzahl der nachgeschalteten Reaktorgefäße beliebig häufige Partikelrück - und Überführung der Neutralisationsmittel in den nochmaligen eingangs erläuterten Umwandlungsprozeß können die zwischen benachbarten Reaktorgefäßen dafür erforderlichen verschiedenen Rohrverbindungen wünschenswert kurz ausgebildet werden. Im unteren Bereich der Reaktorgefäße sind keine derartigen Rohre erforderlich. Bevorzugte diesbezügliche Ausgestaltungen der Erfindung sind Gegenstand der Unteransprüche 24 bis 28.

Die Menge des jeweils weitergeleiteten oder rückgeführten oder aus dem Reaktorgefäß herausgeführten Gasstroms ist durch gegen die Gasströmung gerichtete Leitflächen beliebig einstellbar, so daß eine vorbestimmbare gerichtete Durchsatzmenge in die verschiedenen Rohrverbindungen hineingeleitet werden kann.

Bei allen bisher geschilderten Ausführungsformen der Erfindung besitzt die als Gliederkopf bezeichnete Gas- und Partikel-Verwirbelungsvorrichtung, die sich im unteren Bereich eines jeden Reaktorgefäßes befindet, in Rotation zu bringende Glieder, die sich radial nach außen von der Rotationsachse im Zustand ihrer Rotationsbewegung befinden. Sobald die Rotation langsamer wird oder ganz zum Stillstand kommt, hängen diese Glieder mehr oder weniger ungeordnet nach unten. Die beim Absinken der Glieder entstehenden Geräusche der einzelnen Glieder können durch eine unterhalb der Glieder angeordnete Abstützeinrichtung stark vermindert werden. Auf dieser Abstützeinrichtung lagern sich die Glieder in ihrer Ruhestellung auf.

Diese Abstützeinrichtung kann nach einer bevorzugten Ausführungsform eine Scheibe umfassen, deren Scheibenfläche zumindest im Bereich ihrer Drehachse senkrecht auf der Drehachse des Gliederkopfes, d. h. auf der Rotationsachse desselben steht, und die an dem Gliederkopf befestigt und mit demselben in Rotation versetzbar ist. Drehachse der Scheibe und Drehachse des Gliederkopfes fallen damit zusammen. Diese Scheibe ist unterhalb der Glieder mit Distanz zu denselben vorhanden. Mit dieser Scheibe wird ein Verheddern der Gliedereinheiten untereinander, was insbesondere bei größeren Gliederköpfen der Fall sein könnte, wirkungsvoll verhindert, ohne daß der Reinigungseffekt der gesamten Vorrichtung dadurch beeinträchtigt würde.

Das von oben auf die oberste Gliederlage einströmende zu reinigende Rauchgas dringt praktische nicht durch die untere oder unterste Lage von Gliedern nach unten hindurch, so daß es nicht auf die Scheibe auftreffen kann. Auf der Scheibe können sich damit auch keine im Gas vorhandenen Staubanteile ablagern. Der von oben auf die Gliedereinheiten anströmende Gasstrom wird zwischen den Gliederlagen verwirbelt und horizontal nach außen getrieben. Durch den in der gesamten Anlage herrschenden Unterdruck wird das nach außen gedrängte und verwirbelte Gas in den Außenbereichen eines jeden Reaktorgefäßes nach oben umgelenkt.

Im oberen Bereich des betreffenden Reaktorgefäßes kann das Gas dann - wie eingangs geschildert - in die einzelnen Rohrleitungen abgelenkt werden. Infolge der Zentrifugalkräfte werden sich die im Gas vorhandenen Staubpartikel und die gegebenenfalls durch Umwandlung in schwerlösliche Verbindungen entstandenen Partikel bevorzugt im Bereich der äußeren Umfassungswände des Reaktorgefäßes befinden. Daher sind die Austritte zu den einzelnen Rohrverbindungen im oberen Umfangsbereich eines jeden Reaktorgefäßes angeordnet, während die Zuleitung von zu reinigendem Gas und von den eingangs genannten basischen Wirstoffen zentral in das betreffende Reaktorgefäß hineingeleitet werden.

Weitere Vorteile und Ausführungsformen der Erfindung sind den in den Ansprüchen weiterhin aufgeführten Merkmalen zu entnehmen.

Die Erfindung wird nun anhand der beigefügten Zeichnung näher erläutert.

In der Zeichnung zeigt:

Fig. 1 im Teilschnitt eine Vorrichtung zum Abscheiden von sauren Schadstoffen aus Gasen bei Betrieb,

Fig. 2 eine Schnittansicht nach Linie II-II in Fig. 1,

Fig. 3 eine Schnittansicht nach Linie III-III in Fig. 1,

Fig. 4 einen Ausschnitt aus Fig. 1 im Ruhezustand der Vorrichtung,

Fig. 5 eine abgeänderte Ausgestaltung eines Gliedes für den Gliederkopf, die auch in Verbindung mit Fig. 1 bis 4 Verwendung finden kann,

Fig. 6 eine weitere abgeänderte Ausgestaltung eines solchen Gliedes,

Fig. 7 im Teilschnitt eine weitere Vorrichtung zum Abscheiden von sauren Schadstoffen aus Gasen, bei der zwei Reaktorgefäße hintereinandergeschaltet sind,

Fig. 8 eine Schnittansicht nach Linie VIII-VIII in Fig. 7,

Fig. 9 eine Schnittdarstellung nach Linie IX-IX in Fig. 7, und

Fig. 10 eine Schnittdarstellung längs Linie X-X in Fig. 7.

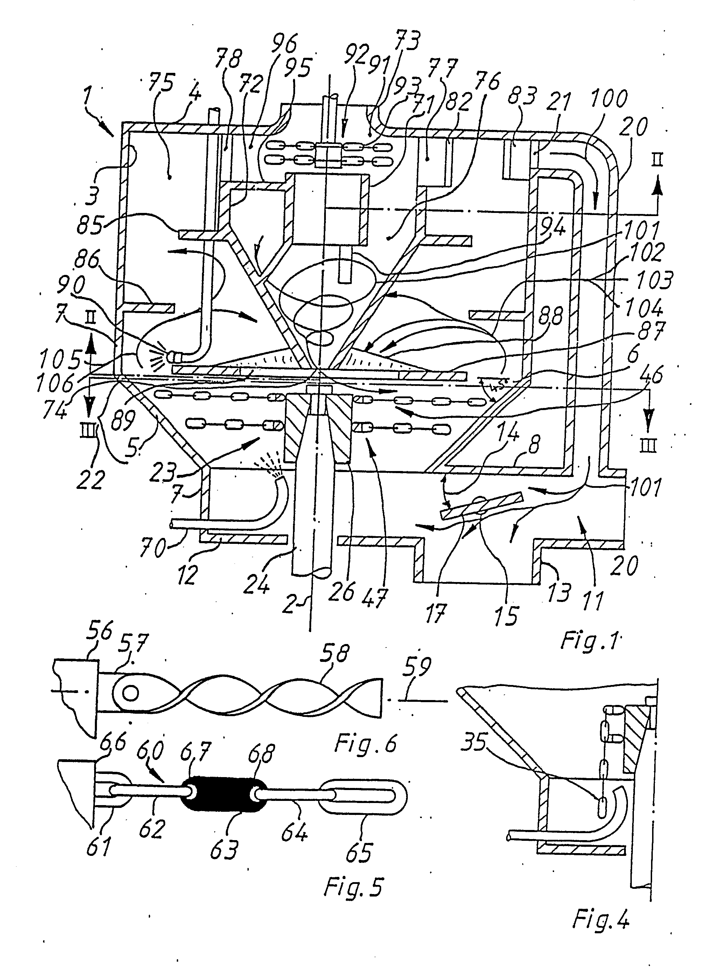

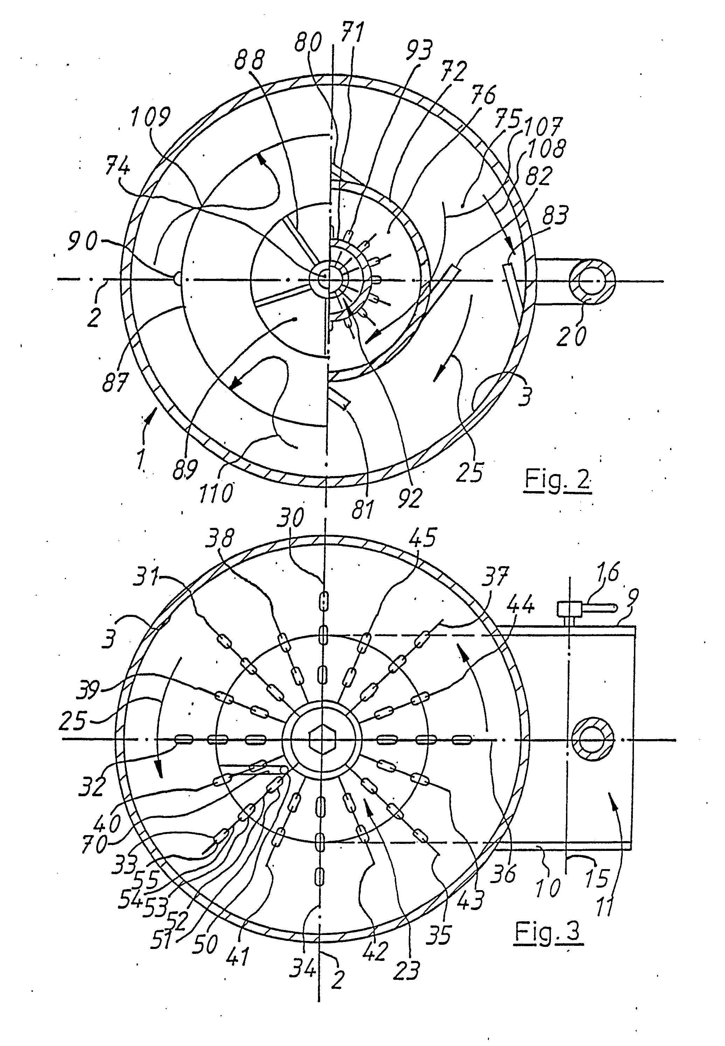

In der Zeichnung ist mit 1 ein Reaktorgefäß bezeichnet, das im oberen Bereich eine zur Achse 2 konzentrische Wandung 3 aufweist, die oben durch eine Deckplatte 4 verschlossen ist. Unten an die konzentrische Wandung 3 schließt sich ein konisches Wandungsstück 5 an, das ebenfalls konzentrisch zur Achse 2 ist und sich im Winkel 6 von 45° nach unten verjüngt. Daran schließt sich unten ein zur Achse 2 koaxiales, zylinderförmiges Wandstück 7 an, das sich auf einem Umfangswinkel von 180° entsprechend der linken Hälfte aus Fig. 1 erstreckt.

Das Wandungsstück 7 setzt sich tangential fort in geraden Seitenwänden 9 und 10, die seitlich einen Ansaugkanal 11 begrenzen. Unten ist das Reaktorgehäuse 1 zusammen mit dem Ansaugkanal 11 durch eine Bodenplatte 12 abgeschlossen. Oben ist der Ansaugkanal durch eine Deckplatte 8 abgeschlossen.

Vom Ansaugkanal 11 zweigt unten ein nach unten gerichteter Reststoffstutzen 13 ab, der in einen nicht dargestellten Reststoffbehälter mündet.

Im Ansaugkanal 11 erstreckt sich auf der Höhe des Reststoffstutzens 13 eine in Pfeilrichtung 14 um eine Achse 15 mittels einer äußeren Handhabe 16 verstellbar angeordnete Weichenklappe 17. Oben in den Ansaugkanal 11 mündet ein aufrechtes Nebenschlußrohr 20, das von einer am oberen Ende der Wandung 3 des Reaktorgefäßes angeordneten Öffnung 21 ausgeht.

In dem unten gelegenen, durch das Wandungsstück 5 umgebenen Gehäuseabschnitt 22 ist ein allgemein mit 23 bezeichneter Gliederkopf angeordnet, der koaxial zur Achse 2 gelagert und um die Achse 2 als Rotationsachse drehbar antreibbar ist über die nach außen geführte Welle 24. Die Drehrichtung ist durch die Pfeile 25 in Figur 3 angezeigt.

Der Gliederkopf 23 besteht aus einer zentralen Nabe 26 und daran außen beweglich angehängten, kettenförmigen Gliedern 30 bis 45, die zu zwei Kränzen 46, 47 auf den Umfang der Nabe verteilt angehängt sind. Die Glieder 30 bis 37 bilden den oberen Kranz 46 und die Glieder 38 bis 45 den mit Abstand darunter gelegenen Kranz 47. Beide Kränze haben die gleiche Anzahl von Gliedern, die zum jeweils anderen Kranz auf Lücke stehen wie aus Figur 3 ersichtlich.

Die Glieder des Kranzes 47 sind kürzer als die des Kranzes 46 zum Ausgleich der konischen Ausgestaltung des Wandungsstückes 5 und so bemessen, daß sie in der in Figur 1 gezeigten Betriebsstellung bis fast an das Wandungsstück 5 reichen. In Ruhestellung hängen die Glieder wie in Figur 4 gezeichnet schwerkraftbedingt nach unten und finden dort in dem durch die Wandung 7 umschlossenen Raum Platz. Beim Auslaufen fallen die Glieder nach unten in die in Figur 4 gezeichnete Stellung und beim Anlaufen richten sie sich auf in die in Figur 1 gezeichnete Stellung und auf dem Wege dahin ist Platz, so daß die Glieder nirgends anschlagen.

Die Glieder bestehen aus langgestreckten Ösen, zum Beispiel das Glied 35 aus den Ösen 50 bis 55, von denen die jeweils zuinnerst gelegene Öse, also im Beispiel die Öse 50, an der Nabe unbeweglich befestigt ist. Die innersten Ösen stehen mit ihrer Flächenerstreckung vertikal, die nächstfolgenden Ösen, also beispielsweise die Öse 51, horizontal und dann die nachfolgenden Ösen abwechselnd vertikal und horizontal. Für die Glieder können handelsübliche Kettenabschnitte verwendet werden.

Es sind abgeänderte Ausgestaltungen der Glieder und Ösen möglich, wesentlich ist, daß diese beweglich angehängt sind und beim Stillstand schwerkraftbedingt eine andere Stellung einnehmen als bei Rotation. Eine Möglichkeit einer Abänderung der Ausgestaltung der Glieder ist in Figur 5 dargestellt, bei der das Glied 60 aus fünf Gliederelementen 61, 62, 63, 64, 65 besteht. Die Öse 61 ist an der Nabe 66 befestigt, die anderen Glieder sind lose, kettenförmig aneinandergehängt. Die Gliederelemente 62, 64 und 65 sind Ösen wie bei dem Ausführungsbeispiel nach Figur 2 in Form von offenen Ringen. Das Gliederelement 63 ist eine flache, ovale Scheibe, die an beiden Enden Löcher 67, 68 aufweist, in die die Nachbarösen 62 und 64 mit Spiel eingehängt sind. Man kann auch andere oder alle Gliederelemente ausbilden wie das Gliederelement 63.

Figur 6 zeigt eine weitere abgeänderte Ausgestaltung eines Gliedes 58, das aus einem bandförmigen Flacheisen besteht, das um seine Längsachse 59 mehrfach gewunden ist. Das Glied ist mittels einer Öse 57 schwenkbar um eine zur Zeichenebene der Figur 6 senkrechte Achse an der Nabe 56 eingehängt und wie auch in Figur 5 bei Rotation gezeichnet. Statt dessen kann das Glied 58 in der in Figur 6 gezeichneten Stellung auch an der Nabe 56 befestigt sein.

Unterhalb des Gliederkopfes 23 mündet in das Reaktorgefäß 1 eine Zuleitung 70 für die Zufuhr staubförmiger, basischer Verbindung in das Innere des Reaktorgefäßes. Diese Zuleitung 70 ist, wie in Figur 1 angedeutet, in die das Reaktorgefäß durchsetzende Gasströmung, und zwar auf die in Funktionsstellung befindlichen Glieder des Gliederkopfes gerichtet.

Im Inneren des Reaktorgefäßes sind oberhalb des Gliederkopfes 23 zwei koaxial zur Achse 2 ineinandergesteckte Rohrstücke 71, 72 angeordnet, von denen das innere Rohrstück 71 nach oben und unten offen ist. Das innere Rohrstück 71 mündet oben mit Zwischenraum 91 unterhalb des Gasaustrittsstutzen 73, der für den Gasaustritt aus dem Reaktorgefäß dient. Das äußere Rohrstück 72 ist nach unten mit Abstand unter dem inneren Rohrstück konisch verengt auf eine Öffnung 74 und oben offen. Das äußere Rohrstück 72 ist an der Deckplatte 4 befestigt. Das innere Rohrstück 71 ist mit auf den Umfang verteilt angeordneten Stegen 94, 95 am äußeren Rohrstück 72 befestigt.

Zwischen der Außenwand 3 und dem äußeren Rohrstück 72 besteht ein ringförmiger Strömungskanal 75. Zwischen den beiden Rohrstücken 71 und 72 besteht ein ringförmiger Strömungskanal 76. Oben sind auf den Umfang verteilt im Rohrstück 72 Öffnungen 77, 78 angeordnet, so daß der Strömungskanal 75 über die Öffnungen 77, 78 mit dem Strömungskanal 76 kommuniziert. Der Strömungskanal 76 kommuniziert unten mit dem Gasaustrittsstutzen 73.

Koaxial zu den Rohrstücken 71, 72 und der Gliederkopfachse 2 ist auf der Höhe des Zwischenraums 91 oberhalb des inneren Rohrstücks 71 ein zweiter Gliederkopf 92 angeordnet. Dieser zweite Gliederkopf ist kleiner als der Gliederkopf 23. Seine Glieder 93 sind kürzer und alle gleich lang. Im übrigen ist der zweite Gliederkopf genauso ausgebildet wie der erste Gliederkopf 23 und über einen nicht dargestellten Antrieb um die Achse 2 rotierend antreibbar, vorzugsweise im gleichen Drehsinn wie der Gliederkopf 23.

Die Glieder 93 erstrecken sich wie dargestellt bei rotierendem Gliederkopf 92 in den Zwischenraum 91 und ragen durch diesen hindurch in den oberen Bereich beziehungsweise in die obere Verlängerung des ringförmigen Strömungskanals 96. Bei stillstehendem Gliederkopf 92 hängen die Glieder in das Innere des inneren Rohrstückes 71.

Die im Zusammenhang mit dem Gliederkopf 23 beschriebenen Abänderungen sind auch für den Gliederkopf 92 anwendbar.

Oben im Reaktorgefäß 1 sind Leitflächen 80, 81, 82, 83 befestigt, die den einzelnen Öffnungen 77, 78, 21 zugeordnet sind und gegen die durch den Gliederkopf 23 angetriebene, in Pfeilrichtung 25 rotierende Strömung gerichtet sind und in die zugehörige Öffnung führen. Diese Leitelemente schälen aus der Gasströmung Teile heraus und zwingen sie durch die zugehörige Öffnung.

Im Inneren des Reaktorgefäßes 1 sind oberhalb des Gliederkopfes 23 Prallplatten 85, 86, 87 angeordnet, die sich konzentrisch zur Achse 2 und senkrecht zu dieser erstrecken. Die Prallplatten sind auf die Höhe verteilt angeordnet. Die oberste Prallplatte 85 schließt bündig an das äußere Rohrstück 72 an und erstreckt sich etwa bis in die Mitte des Strömungskanals 75. Die darunter gelegene Prallplatte 86 schließt bündig an der Außenwandung 3 an und erstreckt sich etwa bis in die Mitte des Strömungskanals 75. Die darunter gelegene Prallplatte 87 ist über Stege 88 am unteren Ende des äußeren Rohrstückes 72 befestigt und erstreckt sich nach außen bis etwa in die Mitte des Strömungskanals 75. Sie weist einen konzentrischen Durchbruch 89 auf, dessen Durchmesser etwa so groß ist wie der größte Außendurchmesser des äußeren Rohrstückes 72.

Dicht oberhalb der Prallplatte 87 mündet im Inneren des Reaktorgefäßes eine an eine äußere, nicht dargestellte Wasserversorgung anschließbare Einsprühdüse 90, die in den Gasstrom des Strömungskanals 75 gerichtet ist.

Die Vorrichtung wird wie folgt betrieben:
Der Gliederkopf 23 wird rotierend angetrieben. Dadurch wird zu reinigendes Gas in den Ansaugkanal 11 angesaugt. Die Weichenklappe 17 wird so eingestellt, daß eine gewünschte Portion von schweren Teilchen aus dem vorbeiströmenden Gasstrom durch den Reststoffstutzen 13 nach unten aus dem Reaktorgefäß fallen. Bei Beginn steht die Weichenklappe 17 horizontal.

Der Gliederkopf 23 wirkt als Radialgebläse mit diagonaler oder axialer Komponente bedingt durch die konische Ausgestaltung des Wandungsstückes 5. Durch den dadurch hervorgerufenen, eingangsseitigen Unterdruck wird die Gasströmung angesogen. In diese Gasströmung wird über die Zuleitung 70 pulver-förmiger Kalk eingesprüht. Vorzugsweise handelt es sich dabei um Kalziumverbindungen, wie Kalziumcarbonat, Kalziumhydroxid und andere Kalke, die gemahlen sind. Man kann den Kalk zum Teil auch granulatförmig einsprühen. Die Granulatkörnchen zerschlagen sich dann im Laufe der Zeit, während sie an feste Teile im Inneren des Reaktorgefäßes schlagen, und reinigen dabei gleichzeitig diese Teile von Ablagerungen.

Die Gasströmung wird über die Einsprühdüse 90 mit Wasser gesättigt, bis fast der Taupunkt, also Sättigung, erreicht ist. Die Gasströmung bildet einen Zyklon koaxial zur Achse 2, der mäanderartig von unten nach oben durch den Strömungskanal 75, von oben nach unten durch den Strömungskanal 76 und dann von unten nach oben zum Gasaustrittsstutzen 73 strömt. Schwere Teile der Strömung werden durch die Leitfläche 83 und über das Nebenschlußrohr 20 wieder an die Eingangsseite entsprechend der Pfeilrichtung 100 zurückgeführt. Schwere Teilchen fallen auch aus dem unteren Bereich des Strömungskanals 76, in dem die Fliehkraft nicht mehr so groß ist, durch die Öffnung 74 und den Durchbruch 89 entsprechend der Pfeilrichtung 101 zurück in den Wirkbereich des Gliederkopfes und werden erneut herumgewirbelt.

Der zweite Gliederkopf 92 versetzt die auf dem Wege zum Gasaustrittsstutzen 73 befindliche Strömung noch einmal in zyklonartige Rotation beziehungsweise verstärkt deren Rotation, so daß Feststoffteilchen, mit denen diese Strömung beladen ist, radial nach außen geschleudert und vom Gasaustrittsstutzen ferngehalten werden. Die Feststoffteilchen nehmen dann erneut an der Zirkulationsströmung innerhalb des Reaktorgefäßes teil.

Bei den schweren Feststoffteilchen handelt es sich um mit Schadstoff beladene Kalkstaubteilchen und Schmutzstaubteilchen, von denen ein gewünschter Anteil entsprechend der Einstellung der Weichenklappe 17 nach unten abfällt.

Die Strömung wird durch die Glieder des Gliederkopfes verwirbelt und durch die Prallplatten und Rohrstücke zu Umwegen und zusätzlichen Wirbeln gezwungen, wie dies in Figur 1 und 2 durch Pfeile 102 bis 110 angedeutet ist. Im Bereich der rotierenden Glieder des Gliederkopfes wird die Strömung radial nach außen getrieben und dabei von Gliederelement zu Gliederelement unterschiedlichen Druckverhältnissen ausgesetzt, wodurch Wirbel verursacht werden und die Vermischung begünstigt wird.

Mit Hilfe der Weichenklappe 17 kann der Eingangswiderstand heraufgesetzt werden, wodurch die Verweilzeit der zu reinigenden Gase und des pulverförmigen Kalks im Inneren des Reaktorgefäßes und damit auch die Reaktionszeit erhöht wird.

Auf die Ausbildung der Strömung kann man nicht nur durch Einstellen der Weichenklappe 17, sondern auch durch Einstellen der Drehzahl des Sprühkopfes Einfluß nehmen und diese den jeweiligen Betriebsbedingungen auch während des Betriebes entsprechend so einstellen, daß eine möglichst intensive Reinigung stattfindet.

Ein Teil der mit Schadstoff beladenen Schadstoffteilchen wird am Reststoffstutzen 13 ausgeschieden, der Rest wird in einer nicht dargestellten, im Anschluß an das Reaktorgefäß 1 angeordneten Filteranlage ausgeschieden.

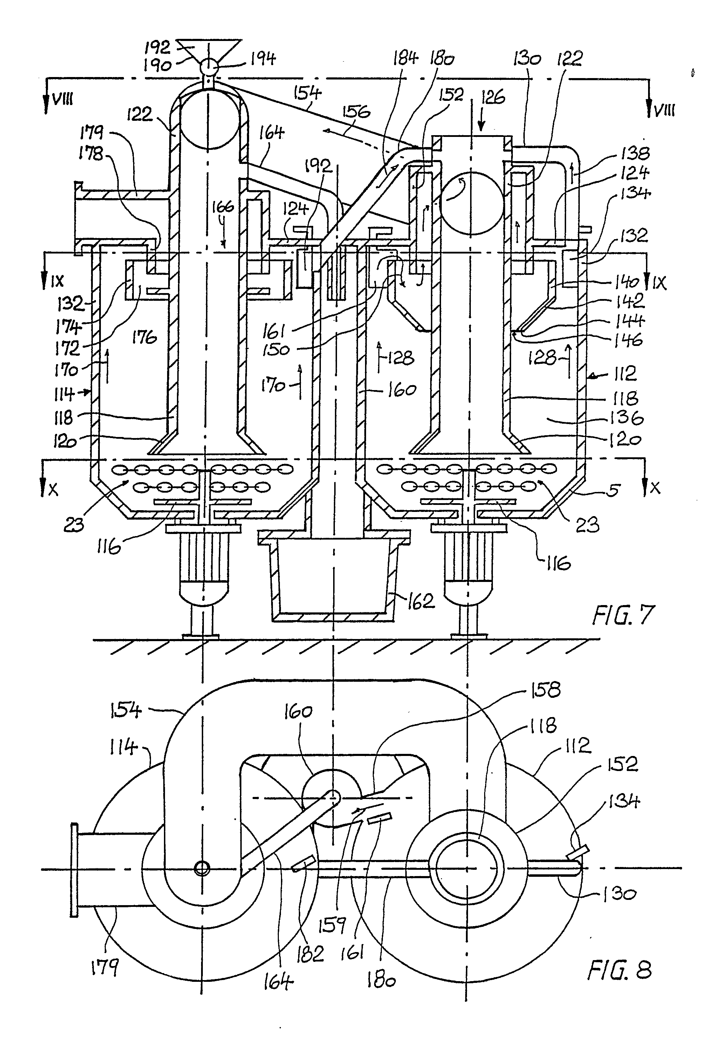

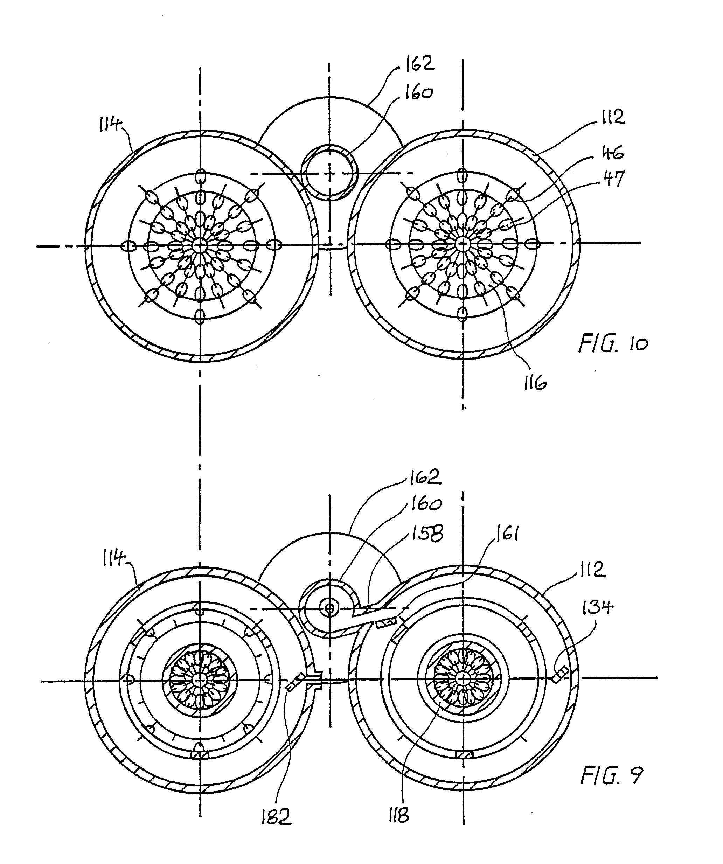

Eine ganz wesentliche Weiterbildung der Erfindung ist in den Figuren 7 und folgende dargestellt. Diese Vorrichtung besitzt mehrere Reaktorgefäße, die in Reihe hintereinander oder auch parallel "geschaltet" werden können.

Im vorliegenden Beispielsfall sind zwei Reaktorgefäße 112, 114 in Reihe hintereinandergeschaltet. Beide Reaktorgefäße entsprechen in ihrer äußeren Wandung in etwa dem Reaktorgefäß 1. So ist bei beiden Reaktorgefäßen 112, 114 in ihrem oberen Bereich 132 eine zu der senkrechten Achse 2 konzentrisch angeordnete zylinderförmige Wandung 3 vorhanden, an die sich nach unten das konisch sich verjüngende Wandstück 5 anschließt. Nach unten hin ist das Wandstück 5 von der Bodenplatte 12 verschlossen.

Im Bereich der Achse 2 wird die Bodenplatte 12 von einer Welle 24 von unten her durchstoßen, an der höhenmäßig im Bereich des konischen Wandstückes 5 jeweils der Gliederkopf 23 ausgebildet ist. Dieser Gliederkopf 23 besitzt beispielsweise die zwei in Fig. 1 dargestellten Gliederkränze 46, 47.

Unterhalb des unteren Gliederkranzes 47 ist eine Scheibe 116 am Gliederkopf befestigt. Die Scheibe kragt rechtwinklig von der Achse 2 aus und besteht aus einer Ringscheibe. Die Ringscheibe ist an dem Gliederkopf befestigt und kann sich daher mit demselben um die Achse 2 rotierend bewegen. Die Scheibe 116 ist in ihren Abmessungen und ihrer Anordnung so ausgebildet, daß sich bei Stillstand der Welle 24 und damit auch des Gliederkopfes 23 die beiden Gliederkränze 46, 47 auf ihr auflagern können. Dadurch, daß sich die Scheibe immer gleich schnell wie die Gliederkränze dreht, können sich die einzelnen Glieder der beiden Gliederkränze geordnet auf ihr absetzen, so daß die einzelnen Glieder der beiden Gliederketten sich nicht verheddern können. Ein Nebeneffekt ist auch, daß durch die Anwesenheit der Scheibe 116 wesentlich weniger Lärm durch die Glieder verursacht wird, als es bei einem unabgestützten Herunterfallen der Gliederkränze bei Stillstand der Vorrichtung im allgemeinen der Fall ist.

Oberhalb des Gliederkopfes 23 ist ein Rohr 118 vorhanden, das konzentrisch zur Achse 2 ausgerichtet ist. An seinem unteren Ende besitzt dieses Rohr 118 einen sich nach unten hin vergrößernden Konus 120. Mit seinem oberen Endbereich 122 ragt das Rohr 118 durch die das Reaktorgefäß oben verschließende Deckplatte 124 hindurch.

Beim Reaktorgefäß 112 besitzt der obere Bereich 122 des Rohres 118 eine stirnseitige Anschlußmöglichkeit für das zu reinigende Gas, dessen Einströmrichtung mit dem Pfeil 126 dargestellt ist. Dieses Gas strömt dann durch das Rohr 118 nach unten hindurch auf den Gliederkopf 23, wobei es durch den oberen Gliederkranz 46 hindurchtritt und zwischen dem Gliederkranz 46 und 47 verwirbelt und nach außen rechtwinklig abgelenkt wird. Es hat sich herausgestellt, daß der untere Gliederkranz 47 eine praktisch undurchdringliche Barriere für den Gasstrom bildet. Anschließend an seine horizontale Umlenkung im Bereich der Gliederkränze 46, 47 wird der Gasstrom in Pfeilrichtung 128 nach oben hin umgelenkt, und zwar infolge des hier herrschenden Unterdruckes, was noch weiter unten näher beschrieben wird.

Im oberen Bereich 122 des Rohres 118 des Reaktorgefäßes 112 sind mehrere Rohre angeschlossen. So mündet im rechten Wandungsbereich ein Rohr 130 ein, das eine Leitungsverbindung zum oberen Bereich 132 des Reaktorgefäßes darstellt. Das Rohr 130 durchstößt dabei die Deckplatte 124 in unmittelbarer Nachbarschaft zur Wandung 3. Vor der Eintrittsöffnung des Rohres 130 unterhalb der Deckplatte 124 ist im Reaktorgefäß 112 eine Leitfläche 134 so angeordnet, daß der sich zyklisch im Zwischenraum 136 zwischen der Wandung 3 und dem Rohr 118 von unten nach oben und dabei um die Achse 2 rotierende Gasstrom gegen diese Leitfläche 134 strömt, wobei ein Teil des Gasstromes von unten in das Rohr 130 hineingetrieben wird. Diese Gasmenge, die durch den Pfeil 138 strömungsmäßig dargestellt ist, strömt damit in den oberen Bereich 122 des Rohres 118 zurück, wo sie wieder mit dem in dieses Reaktorgefäß einströmende Gas 126 zusammentrifft und mit demselben dann noch einmal durch das Reaktorgefäß 112 hindurchgetrieben wird.

Zwischen dem Rohr 118 und der Wandung 3 ist im oberen Bereich 132 des rechten Reaktorgefäßes 112 ein weiteres zylindrisches Wandstück 140 vorhanden. Zwischen diesem Wandstück 140 und der Deckplatte 124 ist ein Freiraum vorhanden. Nach unten hin schließt sich an dieses Wandstück 140 ein sich nach unten hin verjüngender Konus 142 an. Zwischen der unteren Stirnseite 144 des Konus 142 und dem Rohr 118 ist ein Ringspalt 146 vorhanden. Von der Gasmenge, die in den Zwischenraum 148 zwischen dem Wandstück 140 und dem Konus 142 eingetreten ist, und die durch den Pfeil 150 dargestellt wird, können die in diesem Gas vorhandenen Partikel nach unten durch den Ringspalt hindurchfallen, so daß sie wieder in den oberhalb des Gliederkopfes vorhandenen Gasstrom auftreffen und wieder nach oben mitgerissen werden können. Der in dem Zwischenraum 148 vorhandene Gasstrom kann dann von diesen Partikeln befreit nach oben in ein weiteres Rohrstück 152 von unten her hineinströmen, das von oben her in den von dem Wandstück 140 gebildeten Zylinder eintaucht. Dieses Rohrstück 152 umgibt konzentrisch den oberen Bereich 122 des Rohres 118. Von diesem Rohrstück 152 zweigt ein Rohr 154 seitlich ab, das von der Seite her in den oberen Bereich 122 des Rohres 118 vom zweiten, nachgeschalteten Reaktorgefäß 114 einmündet. Die durch dieses Rohr 154 in das zweite Reaktorgefäß 114 strömende Gasmenge, die durch den Pfeil 156 verdeutlicht wird, ist damit weniger verunreinigt, als es die in das Reaktorgefäß 112 einströmende Gasmenge 126 ist.

Ein weiterer Reinigungseffekt der Gasmenge 126 wird dadurch erzielt, daß im oberen Bereich 122 des ersten Reaktorgefäßes 112 ein weiteres Rohr 158 seitlich abzweigt. Das Hineinströmen der Gasmenge, die durch einen Pfeil 159 verdeutlicht wird, in dieses Rohr 158 hinein, wird durch eine Leitfläche 161 im Reaktorgefäß 112 ermöglicht. Auch diese Leitfläche 161 ist wie die Leitfläche 134 im Reaktorgefäß 112 beweglich angeordnet, so daß die entsprechenden Gasströme in die Leitungen 158 bzw. in das Rohr 130 hinein mengenmäßig beliebig beeinflußt werden können. Statt des einen Rohres 158 können auch mehrere derartige Rohre am Umfang des Reaktorgefäßes vorhanden sein.

Dies ist beispielsweise sinnvoll, wenn der Gasstrom lediglich entstaubt zu werden braucht. Der in das zumindest eine Rohrstück 158 einströmende Gasstrom besitzt relativ große Partikel. Je größer die Partikel sind, umso weiter befinden sie sich von der Achse 2 entfernt. Dies wird durch die auf sie wirkenden Zentrifugelkräfte bewirkt, die auf den sich spiralförmig von unten nach oben an der Innenseite der Wandung 3 entlangbewegenden Gasstrom einwirken. Das Rohr 158 mündet in ein senkrecht ausgerichtetes Rohr 160 hinein, an derem untern Ende ein Behälter 162 angeschlossen ist. In diesen Behälter 162 fallen die in dem Gasstrom 160 vorhandenen Partikel infolge der auf sie einwirkenden Schwerkraft hinein. Der Gasstrom selber entweicht durch ein Rohr 164, das oben aus dem Rohr 160 herausführt. Das Rohr 164 mündet mit seinem anderen Ende in den oberen Bereich 122 des im zweiten Behälter 114 vorhandenen Rohres 118 hinein. Durch dieses im zweiten Behälter 114 vorhandene Rohr 118 strömt dann der durch das Rohr 154 eingeleitete Gasstrom 166 auf den ebenfalls im unteren Bereich dieses Reaktorgefäßes 114 vorhandenen Gliederkopf 23. Der Gasstrom 166 ist infolge der bereits ausgeschiedenen Partikel, die in dem Behälter 162 gesammelt werden, weniger verunreinigt als es der Gasstrom 126 ist. Von dem im unteren Bereich des Reaktorgefäßes 114 vorhandenen Gliederkopfes 23 wird der Gasstrom 126 an der Innenseite der Wandung 3 dieses Behälters 114, um die Achse 2 rotierend, nach oben in Richtung des Pfeils 170 umgelenkt.

Im oberen Bereich 132 des Behälters 114 wird der Gasstrom 170 nach innen umgelenkt. Er trifft dort von oben in einen Zwischenraum 172 hinein, der von einem zylindrischen Wandstück 174 seitlich umschlossen ist. Dieses zylindrische Wandstück 174 ist unten offen. In seinem unteren Bereich ist eine Prallplatte 176 quer auskragend von dem Rohr 118 vorhanden.

In den Zwischenraum 172 ragt von oben ein weiteres Rohr 178 hinein, das in ein weiteres Rohr 179 einmündet. Dieses Rohr 179 geht entweder zu einem weiteren nicht dargestellten Reaktorgefäß oder zu einer Filtereinheit, in der das durch das Rohr 179 strömende Gas mechanisch endgereinigt werden kann. In jedem Fall ist im Anschluß an das in den Figuren 7 und 8 dargestellten linken Ende dieses Rohres 179 - mehr oder weniger entfernt - ein Gebläse derart angeordnet, daß in dem Rohr 179 ein Unterdruck entsteht, der durch das Rohrsystem bis in den oberen Bereich 122 des im ersten Behälter 112 vorhandenen Rohres 118 zurückwirkt. Dadurch wird der Gasstrom 126 durch die beiden Reaktorgefäße 112 und 114 hindurchgesaugt.

Die in dem Zwischenraum 172 vorhandenen Partikel können nach unten wieder in Richtung zum Sprühkopf 23 fallen, so daß das in den Zwischenraum 172 gelangte Gas von diesen Verunreinigungen befreit in das Rohr 179 strömen kann.

Im oberen Bereich des Behälters 114 ist unmittelbar unterhalb der Deckplatte 124 in der Wand 3 ein Rohr 180 angeschlossen. Vor seiner Öffnung in der Wand 3 ist eine Leitfläche 182 so angeordnet, daß der Gasstrom 170 von ihr in dieses Rohr 180 umgeleitet werden kann. Auch diese Leitfläche 182 ist in dem Behälter 114 beweglich angeordnet. Das Rohr 180 mündet in den oberen Bereich 122 des im ersten Behälter 112 vorhandenen Rohres 118 hinein. Damit wird eine gewisse Gasmenge wieder in den ersten Behälter und damit in den dort beginnenden Reinigungsprozeß zurückgeführt. Diese Gasmenge wird durch den Pfeil 184 dargestellt.

Die für die Reinigungswirkung erforderliche Umwandlung der in dem Gas vorhandenen sauren Schadstoffe in unschädliche, schwerlösliche Verbindungen erfordert pulverförmige basische Feststoffe, die in das im zweiten Behälter 114 vorhandene Rohr 118 von oben her durch einen Trichter 190 zugegeben werden. Die Feststoffe 192 treffen damit auf Rauchgase 166, die bereits einem Sorptionsprozeß im ersten Reaktorgefäß 112 ausgesetzt waren. Die Rauchgase 166 sind daher zumindest teilweise im ersten Reaktor 112 bereits vorgereinigt, d. h., daß die im Gas vorhandenen Schadstoffe bereits teilweise neutralisiert sind, so daß durch die Zugabe der Neutralisationsmittel, d. h. der basischen Feststoffe 192 in das zweite Reaktorgefäß 114 hinein, eine sehr gute Reaktion dieser Feststoffe 192 mit den noch im Gas vorhandenen Schadstoffen erfolgen kann. Der Wirkungsgrad der chemischen Umsetzung und damit der Reinigungswirkung ist dadurch sehr hoch. Mit dem durch das Rohr 182 in das erste Reaktorgefäß zurückströmenden Gas werden auch Neutralisatiosmittel in Form der Feststoffe 192 in das erste Reaktorgefäß eingeleitet. Diese Neutralisationsmittel sind aber im zweiten Reaktorgefäß 114 teilweise verbraucht. Auf die in dem ersten Reaktorgefäß vorhandenen stark aggressiven Rauchgase treffen somit bereits teilweise verbrauchte Neutralisationsmittel, was zur Folge hat, daß diese noch vorhandenen Neutralisationsmittel im ersten Reaktorgefäß 112 praktisch vollständig abgebaut und umgewandelt werden können.

Statt zwei Reaktorgefäße können auch drei oder mehrere hintereinander angeordnet werden. Der Reinigungsprozeß hängt von der Menge der immer wieder zurückgeführten Gasstrommenge ab. Diese Rückführung erfolgt einerseits durch Rohre entsprechend dem Rohr 130 innerhalb des betreffenden Reaktorgefäßes oder von einem nachgeschalteten Reaktorgefäß 114 in ein vorgeschaltetes Reaktorgefäß 112 hinein mit einem oder mehreren Rohren 180.

Falls erforderlich, können die Neutralisationsmittel 192 auch in die anderen vorhandenen Reaktorgefäße, so beispielsweise auch in das Reaktorgefäß 112 hineingeleitet werden. Durch eine unterhalb des Trichters 190 vorhandene Dosiervorrichtung 194 kann die jeweils erforderliche Zugabemenge entsprechend den Erfordernissen beliebig eingestellt werden. Auch ist es möglich, bei mehreren Reaktorgefäßen jeweils stofflich unterschiedliche Neutralisationsmittel zuzugeben.

Bei der Anordnung von mehreren, rohrmäßig miteinander verbundenen Reaktorgefäßen mit zentrischer Zuführung des zu reinigenden Gases, wie es durch die Figuren 7 bis 9 beispielhaft dargestellt ist, erfolgt die Ableitung des Gasstromes aus dem betreffenden Reaktorgefäß in den Feststoffbehälter 162 oder wieder in das Zuleitungsrohr innerhalb desselben Behälters hinein im äußeren Bereich des betreffenden Behälters, während die Abführung der Rauchgase in einen weiteren Behälter möglichst zentrisch aus dem betreffenden Behälter erfolgt. Bei dieser Anordnung werden damit vorhandene Schadstoffe, die sich infolge der auf sie einwirkenden Zentrifugalkräfte möglichst weit außen in dem jeweiligen Gefäß befinden, in den Reststoffbehälter 162 abgeführt oder beispielsweise durch das Rohr 130 in den Gasstrom zurückgeführt. In den Rohrleitungen, die die Rauchgase in einen weiteren Behälter oder aus der Vorrichtung hinausführen, wie beispielsweise die Rohre 156 und 176, strömt damit Rauchgas, in dem beliebig wenig Verunreinigungen noch enthalten sind.

Die vorstehend beschriebenen unterschiedlichen Vorrichtungen bewirken, daß aus dem zu reinigenden Rauchgas durch Zugabe von - im vorstehenden Fall basischen - Reaktionsmitteln, ausfällbare Bestandteile entstehen. Diese ausfällbaren Bestandteile werden in der vorstehend beschriebenen Art und Weise aus dem Rauchgas entfernt und so beispielsweise in dem Behälter 62 (Fig. 7) gesammelt.

Es besteht die Gefahr, daß diese ausfällbaren Bestandteile die im Inneren der Vorrichtung vorhandenen Verwirbelungseinrichtungen verunreinigen und dadurch in ihrem Wirkungsgrad beeinträchtigen. Um dies zu verhindern, eignen sich in hervorrangendem Maße die vorstehend beschriebenen Kettenglieder.

Sofern die Reinigungswirkung bei dem zu reinigenden Rauchgas so erfolgt, daß durch die Zugabe von Reaktionsmitteln keine ausfällbaren Partikel entstehen, sondern daß bei der Reaktion der zugegebenen Mittel mit dem Rauchgas das zugegebene Mittel entweder in der Gasphase bleibt oder in die Gasphase umgewandelt wird, und damit keine ausfällbaren Partikel entstehen, ist auch keine Gefahr vorhanden, daß die Verwirbelungseinrichtung verschmutzen könnte; in diesem Falle können statt der vorstehend beschriebenen Kettenglieder auch aus dem Stand der Technik bekannte Verwirbelungseinrichtungen wie beispielsweise Schaufelräder oder Gebläseräder eingesetzt werden.

## Ansprüche

01) Vorrichtung zum Abscheiden von Stäuben und/oder von sauren Schadstoffen aus Gasen, wobei die sauren Schadstoffe mit basischen Stoffe gebunden werden,
- mit zumindest einem Reaktorgefäß, das von dem zu reinigenden Gas durchströmt wird, in das gegebenenfalls die basischen Stoffe eingetrieben werden und das Wirbelbildner in der Bahn des Gases aufweist,
- bei dem im unteren Bereich des Reaktorgefäßes ein um eine vertikale Achse rotierend antreibbarer Gliederkopf angeordnet ist,
**dadurch gekennzeichnet,**
- daß im Bereich des Gliederkopfes (23) die Wandung (5) des Reaktorgefäßes (1) konzentrisch zur Gliederkopfachse (2) ist,
- daß der Gliederkopf aus einer zentralen Nabe (26) und daran außen angeordneten Gliedern (30-45, 58), die über den Umfang der Nabe verteilt sind, besteht und
- daß sich die Glieder bei Rotation bis fast an die Wandung erstrecken.

02) Vorrichtung nach Anspruch 1,
**dadurch gekennzeichnet, daß**
die Glieder (30-45) beweglich angehängt sind.

03) Vorrichtung nach einem der vorhergehenden Ansprüche,
**dadurch gekennzeichnet, daß**
unterhalb des Gliederkopfes (23) mit Spiel Platz im Reaktorgefäß (1) ist für die bei Stillstand des Gliederkopfes unter Schwerkraftwirkung nach unten hängenden Glieder (30-45).

04) Vorrichtung nach einem der Ansprüche 1 bis 3,
**dadurch gekennzeichnet, daß**
unterhalb der Glieder eine Abstützeinrichtung fur die Glieder vorhanden ist, auf der die Glieder in ihrer Ruhestellung auflagerbar sind.

05) Vorrichtung nach Anspruch 4,
**dadurch gekennzeichnet, daß**
die Abstützeinrichtung eine Scheibe umfaßt, deren Scheibenfläche zumindest im Bereich ihrer Drehachse senkrecht auf der Drehachse der Nabe steht und die an der Nabe befestigt und mit derselben in Rotation versetzbar ist, so daß ihre Drehachse mit der der Nabe zusammenfällt.

06) Vorrichtung nach einem der vorhergehenden Ansprüche,
**dadurch gekennzeichnet, daß**
außen an der Nabe (26) mehrer Glieder (30-45) angehängt sind, die aus je mehreren, nach Art von Kettenstücken mit gegenseitiger Beweglichkeit aneinandergehängten Gliederelementen (50-55 ...) bestehen.

07) Vorrichtung nach einem der vorhergehenden Ansprüche,
**dadurch gekennzeichnet, daß**
die Glieder (30-45) zu zwei oder mehrere Kränzen (46, 47) angeordnet sind, wobei jeder Kranz aus mehreren auf der gleichen axialen Höhe auf den Umfang verteilt angeordneten Glieder besteht.

08) Vorrichtung nach Anspruch 6 oder 7,
**dadurch gekennzeichnet, daß**
ein Glied (35) aus flachen Ösen (50-55) besteht, die ineinandergehängt und, bezogen auf ihre Flächenausdehnung, um 90° gegenüber den jeweils benachbarten Ösen verdreht sind.

09) Vorrichtung nach Anspruch 8,
**dadurch gekennzeichnet, daß**
die jeweils zuinnerst gelegenen Ösen (50 ...), bezogen auf ihre Flächenausdehnung, parallel zur Gliederkopfachse (2) angeordnet sind.

10) Vorrichtung nach einem der Ansprüche 7 oder 8,
**dadurch gekennzeichnet, daß**
ein oder mehrere Ösen (63) nur für den erforderlichen freien Spielraum (67, 68) zum Einhängen der Nachbargliederelemente (62, 64) offen und darüberhinaus geschlossen sind.

11) Vorrichtung nach einem der Ansprüche 1 bis 3,
**dadurch gekennzeichnet, daß**
ein Glied (58) aus einem um seine Längsachse (59) mehrfach verdrehten Flachband aus formstabilem Material, vorzugsweise Eisen, besteht.

12) Vorrichtung nach einem der vorhergehenden Ansprüche,
**dadurch gekennzeichnet, daß**
in das Reaktorgefäß basische Wirkstoffe in flüssiger oder pulverförmiger Form einführbar sind.

13) Vorrichtung nach Anspruch 12,
**dadurch gekennzeichnet, daß**
die Einmündung (70) für die Zufuhr der basischen Wirkstoffe in das Innere des Reaktorgefäßes (1) unterhalb des Gliederkopfes (23) angeordnet und in den Gasstrom gerichtet ist.

14) Vorrichtung nach Anspruch 12,
**dadurch gekennzeichnet, daß**
im Inneren des Reaktorgefäßes (1) oberhalb des Gliederkopfes (23) zwei koaxial zur Gliederkopfachse (2) ineinandersteckende Rohrstücke (71, 72) vorgesehen sind, von denen das innere (71) nach unten und oben offen ist und nach oben mit ringförmigem Zwischenraum (91) unter einem Gasaustritt (73) aus dem Reaktorgefäß mündet, von denen das äußere (72) nach unten mit Abstand unter dem inneren Rohrstück verengt und oben offen (77, 78) ist und daß zwischen der Außenwand (3) des Reaktorgefäßes und dem äußeren Rohrstück (72) einerseits und den beiden Rohrstücken andererseits ringförmige Strömungskanäle (75, 76) freibleiben, die oben beziehungsweise unten miteinander und mit dem Gasaustritt kommunizieren.

15) Vorrichtung nach Anspruch 13,
**dadurch gekennzeichnet, daß**
koaxial zu den Rohrstücken (71, 72) und der Gliederkopfachse (2) im Zwischenraum (91) oberhalb des Rohrstückes (71) ein zweiter rotierend antreibbarer Gliederkopf (92) angeordnet ist, dessen Glieder (93) bei Rotation durch den Zwischenraum hindurch in den oberen Bereich des ringförmigen Strömungskanals (76) ragen.

16) Vorrichtung nach Anspruch 14,
**dadurch gekennzeichnet, daß**
der zweite Gliederkopf mit Gliedern ausgestattet ist, die nach einem der Ansprüche 5 bis 10 ausgebildet und angeordnet sind.

17) Vorrichtung nach einem der Ansprüche 13 bis 15,
**dadurch gekennzeichnet, daß**
im Inneren des Reaktorgefäßes (1) oberhalb des Gliederkopfes (23) quer zur Gliederkopfachse (2) sich erstreckende Parallelplatten (85-87) angeordnet sind, die, bezogen auf ihre Höhenlage, entlang der Gliederkopfachse alternierend sich vom äußeren Rohrstück (72) und von der Außenwandung (3) im Zwischenraum (75) zwischen dem äußeren Rohrstück und der Außenwandung erstrecken und in diesem Zwischenraum einen mäanderartigen Strömungspfad für eine Zyklonströmung des Gases bilden.

18) Vorrichtung nach einem der Ansprüche 12 bis 16,
**dadurch gekennzeichnet, daß**
das untere Ende des äußeren Rohrstückes (72) nach unten konisch auf eine Rückführungsöffnung (74) verjüngt ist und
auf der Höhe dieser Rückführungsöffnung konzentrisch zur Gliederkopfachse (2) eine Ringscheibe (87) als Prallplatte angeordnet ist, die sich etwa in der Mitte des auf dieser Höhe zwischen dem äußeren Rohrstück und der Außenwandung (3) bestehenden Zwischenraums (75) erstreckt.

19) Vorrichtung nach einem der vorhergehenden Ansprüche,
**dadurch gekennzeichnet, daß**
im Bereich des Gliederkopfes (23) die Wandung (5) des Reaktorgefäßes (1) nach unten konisch verjüngt ist, vorzugsweise mit 45°, und darüber die Wandung (3) konzentrisch zur Rotationsachse (2) des Gliederkopfes fortgesetzt ist.

20) Vorrichtung nach einem der vorhergehenden Ansprüche,

**dadurch gekennzeichnet,**

daß ein äußerer Nebenschluß (20) für die Strömung, der vom oberen Ende des Reaktorgefäßes (1) ausgeht und senkrecht nach unten zum Ansaugkanal (11) für den Eintritt des Schmutzgases führt, vorgesehen ist und

daß oben im Reaktorgefäß eine gegen die Gasströmung gerichtete Leitfläche (83) angeordnet ist, die in den Nebenschluß führt.

21) Vorrichtung nach einem der vorhergehenden Ansprüche,

**dadurch gekennzeichnet, daß**

im Inneren des Reaktorgefäßes (81) eine an eine äußere Wasserversorgung anschließbare Einsprühdüse (90) mündet, die in den Gasstrom gerichtet ist.

22) Vorrichtung nach einem der Ansprüche 1 bis 12,

**dadurch gekennzeichnet, daß**

- der zu reinigende Gasstrom von oben auf den Gliederkopf gerichtet ist,
- die Einmündung für die Zufuhr der pulverförmigen Feststoffe in das Innere des Reaktorgefäßes hinein oberhalb des Gliederkopfes so angeordnet ist, daß die Feststoffe zusammen mit dem Gasstrom auf den Gliederkopf hinbewegbar sind.

23) Vorrichtung nach Anspruch 21,

**dadurch gekennzeichnet, daß**

ein erstes Rohr oberhalb des Gliederkopfes vorhanden ist, dessen Längsachse mit der Rotationsachse des Gliederkopfes zusammenfällt, aus dessen unteren Endbereich das zu reinigen de Gas nach unten hin austritt und in dessen oberen Endbereich sowohl der Zutritt für dieses Gas als auch für die pulverförmigen Feststoffe ist.

24) Vorrichtung nach Anspruch 22,

**dadurch gekennzeichnet, daß**

- zumindest zwei Reaktorgefäße nacheinander von dem zu reinigenden Gas durchströmbar sind,
- das jeweilige erste Rohr beider Reaktorgefäße von letzterem nach oben hin auskragt,
- eine erste Rohrverbindung zwischen dem ersten und zweiten Reaktorgefäß vorhanden ist, die am ersten Reaktorgefäß im oberen Bereich seines ersten Rohres abzweigt und am zweiten Reaktorgefäß im oberen Bereich von dessen ersten Rohr einmündet,
- von oben in das erste Rohr des ersten Reaktorgefäßes das zu reinigende Gas in die Vorrichtung einleitbar ist,
- von oben in das zweite Rohr des zweiten Reaktorgefäßes die Einmündung für die Zufuhr der pulverförmigen Feststoffe in die Vorrichtung hinein angeordnet ist,

- eine zweite Rohrverbindung vorhanden ist, die im oberen Bereich des ersten Reaktorgefäßes aus demselben herausführt und in den oberen Bereich seines ersten Rohres in dasselbe einmündet,
- eine dritte Rohrleitung vorhanden ist, die im oberen Bereich des zweiten Reaktorgefäßes aus demselben herausführt und in dem oberen Bereich des ersten Rohres vom ersten Reaktorgefäß in dasselbe einmündet,
- zumindest an dem Reaktorgefäß, das dem ersten Reaktorgefäß nachgeordnet ist, eine vierte Rohrverbindung vorhanden ist, die im oberen Bereich aus dem Reaktorgefäß herausführt und in eine Zuleitung einmündet, die zu einem Reststoffbehälter führt,
- eine fünfte Rohrverbindung von dem ersten Reaktorgefäß, aus seinem oberen Bereich heraus, in diese Zuleitung einmündet.

25) Vorrichtung nach einem der Ansprüche 22 bis 24,

**dadurch gekennzeichnet, daß**

- das erste Rohr von einem konzentrisch zur Gliederkopfachse und dem seitlichen Abstand zum ersten Rohr angeordneten zylindrischen Wandstück mit unten konzentrisch sich verjüngendem Konus umgeben ist, wobei das Wandstück von der das Reaktorgefäß oben verschließenden Deckplatte und der unteren Wand des Konus vom ersten Rohr einen Abstand besitzen,
- ein zweites Rohr vorhanden ist,
-- dessen Längsachse mit der des Gliederkopfes zusammenfällt,
-- dessen Durchmesser größer als der des ersten Rohres und kleiner als der des zylindrischen Wandstückes ist,
-- dessen unterer Rand unterhalb des oberen Randes des Wandstückes vorhanden ist,
-- das nach oben hin durch eine Deckelplatte, die zwischen seiner oberen Wand und dem ersten Rohr vorhanden ist, verschlossen ist,
-- in das die erste Rohrverbindung einmündet.

26) Vorrichtung nach einem der Ansprüche 22 bis 24,

**dadurch gekennzeichnet, daß**

- das erste Rohr von einem konzentrisch zur Gliederkopfachse und in seitlichem Abstand zum ersten Rohr angeordneten zylindrischen Wandstück umgeben ist, wobei das Wandstück von der das Reaktorgefäß oben verschließenden Deckplatte einen Abstand besitzt,
- ein Ringkranz am ersten Rohr, in Höhe des unteren Bereichs dieses zylindrischen Wandstücks, angebracht ist,
- zwischen diesem Ringkranz und dem zylindrischen Wandstück ein Freiraum vorhanden ist,
- ein drittes Rohr vorhanden ist,
-- dessen Längsachse mit der des Gliederkopfes zusammenfällt,

-- dessen Durchmesser größer als der des ersten Rohres und kleiner als der des zylindrischen Wandstückes ist,

-- dessen unterer Rand unterhalb des oberen Randes des Wandstückes vorhanden ist,

-- das nach oben hin in eine weitere Rohrverbindung einmündet, die entweder in das erste Rohr des weiteren Reaktorgefäßes hineinführt oder zu einer Gasfiltereinrichtung hinführt.

27) Vorrichtung nach Anspruch 25 oder 26, **dadurch gekennzeichnet, daß** gegen die Gasströmung gerichtete Leitflächen so vorhanden sind, daß eine Gasströmung vorbestimmbaren Durchsatzes von dem oberen Bereich des jeweiligen Reaktorgefäßes in die zweite und/oder dritte und/oder fünfte Rohrverbindung hinein erzeugbar ist.

28) Vorrichtung nach einem der Ansprüche 22 bis 27, **dadurch gekennzeichnet, daß** im Inneren des Reaktorgefäßes eine an eine äußere Wasserversorgung anschließbare Einsprühdüse mündet, die in den außerhalb des ersten Rohres vorhandenen Gasstrom gerichtet ist.

29) Gliederkopf für eine Vorrichtung zum Abscheiden von Stäuben und/oder von sauren Schadstoffen aus Gasen nach einem der vorstehenden Ansprüche **dadurch gekennzeichnet, daß** - er aus einer zentralen Nabe (26) und daran außen angeordneten Gliedern (30 - 45, 58), die über den Umfang der Nabe verteilt sind, besteht.

30) Gliederkopf nach Anspruch 29, **dadurch gekennzeichnet, daß** die Glieder (30 - 45) beweglich angehängt sind.

31) Gliederkopf nach Anspruch 29 oder 30, **dadurch gekennzeichnet, daß** außen an der Nabe (26) mehrere Glieder (30 - 45) angehängt sind, die aus je mehreren, nach Art von Kettenstücken mit gegenseitiger Beweglichkeit aneinandergehängten Gliederelementen (50 - 55 ...) bestehen.

32) Gliederkopf nach einem der Ansprüche 29 bis 31, **dadurch gekennzeichnet, daß** die Glieder (30 - 45) zu zwei oder mehreren Kränzen (46, 47) angeordnet sind, wobei jeder Kranz aus mehreren auf der gleichen axialen Höhe auf den Umfang verteilt angeordneten Glieder besteht.

33) Gliederkopf nach Anspruch 31 oder 32, **dadurch gekennzeichnet, daß** ein Glied (35) aus flachen Ösen (50 - 55) besteht, die ineinandergehängt und, bezogen auf ihre Flächenausdehnung, um 90° gegenüber den jeweils benachbarten Ösen verdreht sind.

34) Gliederkopf nach Anspruch 33, **dadurch gekennzeichnet, daß** die jeweils zuinnerst gelegenen Ösen (50 ...), bezogen auf ihre Flächenausdehnung, parallel zur Gliederkopfachse (2) angeordnet sind.

35) Gliederkopf nach Anspruch 32 oder 33, **dadurch gekennzeichnet, daß** ein oder mehrere Ösen (63) nur für den erforderlichen freien Spielraum (67, 68) zum Einhängen der Nachbargliederelemente (62, 64) offen und darüber hinaus geschlossen sind.

36) Gliederkopf nach Anspruch 29 oder 30, **dadurch gekennzeichnet, daß** ein Glied (58) aus einem um seine Längsachse (59) mehrfach verdrehten Flachband aus formstabilem Material, vorzugsweise Eisen, besteht.

Fig.1

Fig.6

Fig.5

Fig.4

Fig. 2

Fig. 3

FIG. 7

FIG. 8

FIG. 10

FIG. 9

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|-----------|---------------------------------------------------------------------------------------|-------------------|------------------------------------------|
| A | DE-A-3 122 026 (P. CHRISTIAN) --- | | B 01 D 50/00 B 01 D 53/34 B 01 D 45/14 B 01 J 8/10 |
| A | DE-A-2 386 336 (PFIZER INC.) ----- | | |
| | | | **RECHERCHIERTE SACHGEBIETE (Int. Cl.4)** |
| | | | B 01 D 50/00 B 01 D 53/00 B 01 D 45/00 B 01 J 8/00 |

Der vorliegende Recherchenbericht wurde für alle Patentansprüche erstellt

| Recherchenort | Abschlußdatum der Recherche | Prüfer |
|---------------|----------------------------|--------|
| DEN HAAG | 11-07-1989 | POLESAK, H.F. |